# EUROPÄISCHE PATENTSCHRIFT

(11) **EP 1 103 804 B1**
(45) Veröffentlichungstag und Bekanntmachung des Hinweises auf die Patenterteilung: **31.08.2005**
(21) Anmeldenummer: 99123438.6
(22) Anmeldetag: 24.11.1999
(51) Int. Cl.: G01N 21/39

(54) **Verfahren zur Detektion von Erdgas**
Method for detection of natural gas
Procédé pour la détection d'un gaz naturel

(43) Veröffentlichungstag der Anmeldung: 30.05.2001
(73) Patentinhaber: SIEMENS AKTIENGESELLSCHAFT, 80333 München (DE)
(72) Erfinder: Strzoda, Rainer, 81739 München (DE); Magori, Erhard, 85551 Kirchheim (DE); Meixner, Hans, 85540 Haar (DE)

(56) Entgegenhaltungen:
- EP-A- 0 874 233
- WO-A-89/03028
- GB-A- 2 163 251
- US-A- 3 998 557
- US-A- 4 507 558

## Beschreibung

Die Erfindung betrifft ein Verfahren zur Detektion von Erdgas durch den Nachweis vorgegebener Gaskomponenten davon.

Leckagen an Erdgasleitungen stellen nach wie vor ein erhebliches Sicherheitsrisiko dar. Die frühzeitige Erkennung von Leckagen minimiert nicht nur die Unfallgefahr, sondern stellt daneben auch einen nicht zu vernachlässigenden wirtschaftlichen Faktor für die Gasversorgungsunternehmen dar.

Die Detektion von undichten Stellen im Leitungsnetz erfolgt üblicherweise mit transportablen Lecksuchgeräten. Damit werden beispielsweise Messungen entlang einer im Boden verlegten Gasleitung vorgenommen. Eine gegenüber der Umgebung erhöhte Methankonzentration deutet auf eine Leckage hin. Gemessen wird im allgemeinen nicht spezifisch Methan, sondern der Kohlenwasserstoffgehalt der Atmosphäre. Dabei ergibt sich das Problem der Querempfindlichkeit. So können erhöhte Kohlenwasserstoffkonzentrationen auch aus anderen Emissionsquellen entstehen, wie beispielsweise aus dem Fahrzeugverkehr.

Die Messung von Methan alleine reicht zur absolut sicheren Identifizierung von Erdgas nicht aus. Methan wird beispielsweise auch von landwirtschaftlichen Betrieben und von Deponien emittiert.

Bei der Suche nach Erdgas-Leckagen werden verschiedene Detektionsprinzipien angewandt. Zum Einsatz kommen Pellistoren, Metalloxid-Gassensoren, Flammenionisationsdetektoren (FID), sowie Meßverfahren auf der Grundlage optischer Absorption im mittleren Infrarotbereich. Sämtliche dieser herkömmlichen Verfahren bestimmen jedoch mehr oder weniger den gesamten Kohlenwasserstoffgehalt. Pellistoren beispielsweise, die auf der Basis einer katalytischen Verbrennung des Methans detektieren, sind anfällig gegen bestimmte Störgase, wie siliziumhaltige Gase. Dies führt allgemein zu einem Empfindlichkeitsverlust und verminderter Detektionssicherheit. Die selektive Erfassung einzelner Gaskomponenten, wie beispielsweise Methan, ist nicht gegeben. Damit ergibt sich ein erhöhter Aufwand bei der eindeutigen Identifizierung von Erdgasleckagen.

Aus der Patentschrift, US-A- 4507558 ist ein Verfahren zur Unterscheidung von Methanquellen bekannt wobei das Verhätenis der Konzentrationen von Methan und Ethan ermittelt wird.

Der Erfindung liegt die Aufgabe zugrunde, ein Verfahren zur Detektion von Erdgas bereitstellen mit dem Erdgas zuverlässig detektierbar ist.

Die Lösung dieser Aufgabe geschieht durch die Merkmale des Patentanspruchs 1.

Vorteilhafte Ausgestaltungen sind den Unteransprüchen zu entnehmen.

Der Erfindung liegt die Erkenntnis zugrunde, daß die Nachteile im Stand der Technik vermieden werden können, indem die Konzentrationen von mindestens zwei Bestandteilen von Erdgas selektiv gemessen werden und aus dem Verhältnis der Konzentrationen eine Unterscheidung zwischen Erdgas oder nicht-Erdgas getroffen werden kann.

Die in dem Verfahren verwendete Meßmethode ist die Laserspektroskopie. Darin werden vorzugsweise DFB-Laserdioden (Distributed Feedback-Dioden) verwendet. Die Durchstimmung des Lasers bedeutet, daß dieser auf der Eingangsseite elektrisch mit zunehmender Stromstärke beaufschlagt wird und, einhergehend mit zunehmender Temperatur, die Emissionswellenlänge des Lasers in einen bestimmten Bereich ansteigt. Zu den verfahren der Laserspektroskopie zählen auch die Detektion der Harmonischen, Heterodynspektroskopie und photoakustische Verfahren.

Der Laser wird so ausgewählt, daß seine Emissionswellenlänge in dem Bereich einer Bande von Methan liegt, innerhalb der eine ausgewählte Absorptionslinie vorhanden ist, die für die Methandetektion herangezogen wird. Bei benachbart liegenden Absoptionslinien von Methan und Ethan wird mit einem Laser gearbeitet. Die durch den Abstimmbereich vorgegebenen Emmissionswellenlängen des Lasers müssen den Bereich der zu detektierenden Absorptionslinien überdecken. Absorptionsbanden von Methan liegen beispielsweise bei 1,66 und 3,31 µm.

Im folgenden wird anhand einer schematischen Figur ein weiteres Ausführungsbeispiel beschrieben.

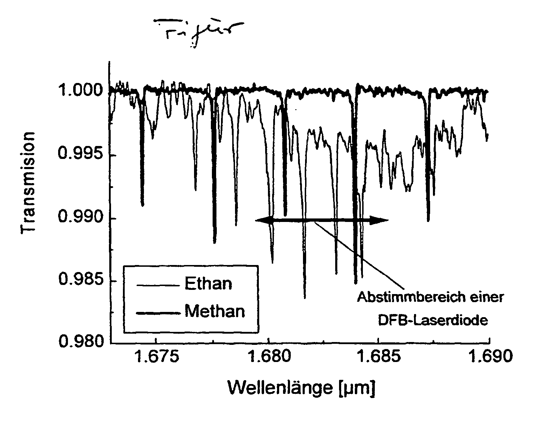

Die Figur zeigt einzelne Absorptionslinien von Gaskomponenten in Relation zum Bereich der Emissionswellenlänge eines DFB-Lasers.

Die Messung der Gaskonzentration beruht auf der Absorptionsmessung im nahen Infrarotbereich. Hierbei kommen insbesondere Oberwellenbande von Methan und Ethan in Frage. Die Zentren charakteristischer Banden liegen für Methan bei 1,66 µm und für Ethan bei 1,69 µm. Die Figur stellt das Absorbtionsspektrum im überlappenden Bereich der Methan- und Ethanbanden dar. In diesem Bereich liegen Absorptionslinien von Ethan benachbart zu solchen von Methan. Bei der Absorptionsmessung wird insbesondere die geringe Linienbreite des von Laserdioden (DFB-Laserdiode) emittierten Lichtes zur spektral aufgelösten Messung an einzelnen Vibrations-Rotationsübergängen ausgenutzt. In Verbindung damit ergibt sich eine hohe Selektivität bei jeder einzelnen Gasart.

Erdgas setzt sich beispielsweise aus den Hauptkomponenten Methan, Ethan, Propan, Butan, Kohlendioxyd und Wasser zusammen. Verschiedene Literaturangaben zeigen eine relativ geringe Spannbreite bezüglich der einzelnen Konzentrationen. In jedem Fall übersteigt jedoch der Methan-Anteil 80%, der Ethan-Anteil liegt unter 10%. Die Konzentration der übrigen Komponenten liegt im Prozentbereich oder darunter. Vor der Einspeisung in ein Leitungsnetz wird das Erdgas von höher siedenden Kohlenwasserstoffen gereinigt und die Zusammensetzung wird überwacht. Die Identifizierung von Erdgas kann durch Messung von mindestens zwei Gaskomponenten, wie beispielsweise Methan und Ethan erfolgen. Aus den bekannten Konzentrationsverhältnissen im Erdgas kann eine Unterscheidung zwischen Erdgas und anderen Quellen von Methan, beispielsweise Faulgas, getroffen werden, deren Gaszusammensetzung sich von der Zusammensetzung von Erdgas charakteristisch unterscheidet.

Eine vorteilhafte Ausgestaltung der Erfindung stellt sich wie folgt dar:
Die Messung geschieht im nahen Infrarotbereich im langwelligen Zweig der Oberwellenbande von Methan bei 1,66 µm. Hier überlappen die Banden von Methan und Ethan. Die Emissionswellenlänge eines Lasers wird durchgestimmt, so daß die Absorptionslinien zweier oder mehrerer relevanter Gase, die in diesem Wellenlängenbereich liegen, abgetastet werden. Die Absorptionslinien der entsprechenden Gase bzw. Gaskomponenten des Erdgases müssen eine ausreichende Stärke aufweisen. Will man z.B. zur Erzielung höchster Sensitivität die jeweils stärksten Absorptionslinien der beiden Banden verwenden, so kann man dafür zwei Laserdioden mit zwei entsprechenden Emissionswellenlängen einsetzen.

Die Figur stellt insbesondere das Absorptionsspektrum von Methan und Ethan um 1,68 um Wellenlänge, aufgenommen mit einem-Fourier-Transform-Spektrometer, dar. Innerhalb des Abstimmbereiches einer typischen DFB-Laserdiode sind mehrere Absorptionslinien von Methan oder Ethan der Messung zugänglich.

## Patentansprüche

1. Verfahren zur Unterscheidung von Methanquellen bei Methankonzentrationen in der Umgebungsluft mittels Laserspektroskopie im Infrarotbereich, bei dem:
- zusätzlich zu Methan zumindest eine weitere Erdgaskomponente, wie Ethan, detektiert wird, indem
- an einem Laser durch eingangsseitig zunehmende Stromstärke dessen Emissionswellenlänge über einen Wellenlängenbereich elektrisch durchgestimmt wird, welcher mindestens eine Absorptionslinie von jeder der zu detektierenden Gaskomponenten enthält,
- Absorptionsmessungen im Bereich mindestens einer Absorptionsbande von Methan stattfinden, und
- durch Ermittlung des Verhältnisses der konzentrationen zwischen Methan und der zumindest einen weiteren Gaskomponente die Methanquelle identifizierbar ist.

2. Verfahren nach Anspruch 1, worin die zweite Gaskomponente Ethan ist.

3. Verfahren nach Anspruch 2, worin Absorptionsmessungen in einer Absorptionsbande von Methan im Bereich von 1,66µm bis 1,69 µm oder bei 3,31 µm stattfinden.

4. Verfahren nach Anspruch 3, worin die Absorptionsmessungen in einem Wellenlängenbereich von 1,679 µm bis 1,685 µm stattfinden.

5. Verfahren nach einem der vorhergehenden Ansprüche, worin als Laser DFB-Laserdioden eingesetzt werden.

6. Verfahren nach einem der vorhergehenden Ansprüche, worin zusätzliche Laser zur Detektion verschiedener Gaskomponenten eingesetzt werden.

## Claims

1. Method for distinguishing sources of Methane in Methane concentrations in the ambient air by means of laser spectroscopy in the infrared range, in which:
- in addition to Methane at least one further natural gas component, such as Ethane, is detected, in that
- at a laser, by increasing the current strength on the input side, its emission wavelength is electrically tuned over a range of wavelengths containing at least one absorption line of each of the gas components to be detected,
- absorption measurements are undertaken in the range of at least one absorption band of Methane and
- by determining the relationship of the concentration between Methane and the at least one further gas component the Methane source can be identified.

2. Method in accordance with claim 1, in which the second gas component is Ethane.

3. Method in accordance with claim 2, in which absorption measurements are undertaken in an absorption band of Methane in the range of 1.66 µm to 1.69 µm or at 3,31 µm.

4. Method in accordance with claim 3, in which the absorption measurements are undertaken in a wavelength range of 1.679 µm to 1.685 µm.

5. Method in accordance with one of the previous claims, in which DFB laser diodes are employed as lasers.

6. Method in accordance with one of the previous claims, in which additional lasers are employed for detection of different gas components.

## Revendications

1. Procédé pour la différenciation de sources de méthane avec des concentrations de méthane dans l'air ambiant par spectroscopie au laser dans le domaine de l'infrarouge, dans lequel :
- au moins un autre composant du gaz naturel, comme l'éthane, est détecté en plus du méthane,
- en ajustant par voie électrique la longueur d'onde d'émission d'un laser en augmentant l'intensité du courant côté entrée sur une gamme de longueur d'onde, laquelle contient au moins une ligne d'absorption de chacun des composants du gaz à détecter,
- des mesures d'absorption sont effectuées dans la zone d'au moins une bande d'absorption du méthane, et
- la source de méthane est identifiable par détermination du rapport des concentrations entre le méthane et l'au moins un autre composant du gaz.

2. Procédé selon la revendication 1, dans lequel le deuxième composant du gaz est l'éthane.

3. Procédé selon la revendication 2, dans lequel les mesures d'absorption se déroulent dans une bande d'absorption du méthane dans la plage de 1,66 µm à 1,69 µm ou à 3,31 µm.

4. Procédé selon la revendication 3, dans lequel les mesures d'absorption sont effectuées dans une plage de longueur d'onde de 1,679 µm à 1,685 µm.

5. Procédé selon l'une des revendications précédentes, dans lequel des diodes à laser DFB sont utilisées comme laser.

6. Procédé selon l'une des revendications précédentes, dans lequel des lasers supplémentaires sont utilisés pour la détection de différents composants du gaz.
